# EUROPÄISCHE PATENTSCHRIFT

(11) **EP 0 787 168 B1**
(45) Veröffentlichungstag und Bekanntmachung des Hinweises auf die Patenterteilung: **28.04.1999**
(21) Anmeldenummer: 95935354.1
(22) Anmeldetag: 19.10.1995
(51) Int. Cl.: C08L 23/08, C08J 5/12

(54) **QUELLSCHWEISSBARE FOLIE UND FORMMASSE AUF NICHT-PVC-BASIS**
SOLVENT-BONDING FOIL AND NON-PVC-BASED MOULDING COMPOUND
FEUILLE COLLABLE PAR SOLVANT ET MATIERE DE MOULAGE NON A BASE PVC

(30) Priorität: 20.10.1994 DE 4437536
(43) Veröffentlichungstag der Anmeldung: 06.08.1997
(73) Patentinhaber: HT TROPLAST AG, 53840 Troisdorf (DE)
(72) Erfinder: KLAAR, Karlo, D-53844 Troisdorf (DE)
(74) Vertreter: Wübken, Ludger
(86) Internationale Anmeldenummer: DE9501472
(87) Internationale Veröffentlichungsnummer: WO9612763

(56) Entgegenhaltungen:
- EP-A- 0 353 068
- DE-A- 4 202 228
- US-A- 3 483 023

## Beschreibung

### Technisches Gebiet

Die vorliegende Erfindung betrifft eine quellschweißbare Abdichtungsbahn auf Nicht-PVC-Basis sowie ein Verfahren zu deren Herstellung.

Quellschweißbare Abdichtungsbahnen werden insbesondere im Hoch-Tief- und Ingenieurbau eingesetzt und ermöglichen die Verschweißung der einzelnen Abdichtungsbahnen untereinander mit bestimmten Lösungsmitteln (Quellschweißmitteln).

Dichtungsbahnen bzw. -folien zum Abdichten von Flächen im Hoch-, Tief- und Ingenieurbau müssen eine Reihe verschiedener Eigenschaften aufweisen, um den gestellten Anforderungen bezüglich Wasserdichtigkeit und Witterungsbeständigkeit zu genügen. Zu diesen Eigenschaften gehören hohe mechanische Festigkeit und ausreichende Dehnung auch bei einer Temperatur von 80°C, langjährige Beständigkeit gegen Witterungseinflüsse und UV-Strahlung, leichte Verbindbarkeit der Folienbahnen untereinander zu größeren Planen, Alterungsbeständigkeit sowie biologische Resistenz.

### Stand der Technik

Formmassen auf Basis wenigstens eines Copolymeren, welches aufgebaut ist aus dem Monomeren Ethylen und einem Comonomeren, ausgewählt aus der Gruppe bestehend aus Vinylestern einer C₂-bis C₃-Alkancarbonsäure und C₁- bis C₄-Alkylestern der Acrylsäure, sind bekannt und werden zur Herstellung von Dichtungsbahnen eingesetzt (EP-B 0 428 851).

Diese Dichtungsbahnen haben jedoch den Nachteil, daß sie nur mittels Wärme, z.B. Heißluft, homogen miteinander verschweißt werden können.

Aus der EP-A2 0 353 068 ist eine beschichtete Folie zum Aufdampfen eines Metalls bekannt, wobei die Trägerschicht dieser Folie 10 bis 95 Gew.-% mindestens eines statistischen Ethylencopolymers, das 50 bis 95 Gew.-% Ethyleneinheiten enthält, ausgewählt aus der Gruppe Ethylen-Acrylsäureester-Copolymere, Ethylen-Methacrylsäureester-Copolymere, Ethylen-Acrylsäure-Copolymer, Ethylen-Methacrylsäure-Copolymer, Ethylen-ungesättigtes Glycidylat-Copolymere, Ethylen-ungesättigtes Dicarbonsäureanhydrid-Acrylsäure-Terpolymere und Ethylen-ungesättigtes Dicarbonsäureanhydrid-Methacrylsäureester-Terpolymere, und (ii) 5 bis 90 Gew.-% eines kristallinen Polyolefins enthält. Diese Schrift enthält jedoch keinerlei Hinweise auf eine mögliche Quellverschweißbarkeit der Folie oder der Herstellung von Abdichtungsbahnen.

### Aufgabe der Erfindung

Aufgabe dieser Erfindung ist es, eine Abdichtungsbahn und ein Verfahren zu ihrer Herstellung zur Verfügung zu stellen, wobei die Abdichtungsbahnen die für Hoch-, Tief- und Ingenieurbau gestellten Anforderungen erfüllen, insbesondere hohe Reißfestigkeiten sowie Reißdehnungen bei einer Temperatur von 80°C aufweisen, und wobei sie zusätzlich quellverschweißbar sind.

### Darstellung der Erfindung

Obige Aufgabe wird gelöst durch den mit den Merkmalen der unabhängigen Ansprüche gekennzeichneten Erfindungsgegenstand, bevorzugt in Verbindung mit den Merkmalen der Unteransprüche.

Die Formmasse zur Herstellung der erfindungsgemäßen Addichtungsbahn beinhaltet ein Polymer, das aufgebaut ist aus dem Monomeren Ethylen und wenigstens einem Comonomer, welches aus der Gruppe bestehend aus Vinylestern einer C₂- bis C₃-Alkancarbonsäure und C₁- bis C₄-Alkylestern der Acrylsäure ausgewählt ist, wobei der Comonomergehalt mindestens 27 Gew.-%, bevorzugt aber mehr als 30 Gew-% beträgt. Diese Formmasse enthält zusätzlich ein Polyolefin oder eine Mischung mehrerer Polyolefine in einer Menge von mindestens 10 Gew.-% der Formmasse. Der THF-Extrakt der Formmasse beträgt nach DIN 53738 bei einer Extraktionsdauer von 4 h bevorzugt mehr als 35 %. Aus dieser Formmasse hergestellte Abdichtungsbahnen sind quellverschweißbar und erfüllen die an Dichtungsbahnen im Hoch-, Tief- und Ingenieurbau gestellten Anforderungen.

Unter Polyolefinen in Sinne der vorliegenden Erfindung werden insbesondere Homopolymerisate von Olefinen sowie Copolymere des Ethylens mit bis zu etwa 20 Gew.-% eines C₃- bis C₈-Olefins als Comonomer verstanden. Bevorzugt werden Polyethylene wie HDPE, LDPE, LLDPE und VLDPE sowie Polypropylen.

Die erfindungsgemäße Abdichtungsbahn kann in besonderen Ausführungsformen Füllstoffe enthalten, wobei der THF-Extrakt der Abdichtungsbahn ohne Füllstoffe nach DIN 53738 bei einer Extraktionsdauer von 4 h bevorzugt größer als 50 % und, soweit Füllstoffe in der Abdichtungsbahn enthalten sind, der THF-Extrakt größer als [50·(1-Füllstoffgehalt)] % ist. Beträgt beispielsweise der Füllstoffgehalt 10 Gew.-%, so sollte der THF-Extrakt bevorzugt mehr als 45 % betragen, bei einem Füllstoffgehalt von 30 Gew.-% beträgt der THF-Extrakt bevorzugt mehr als 35 %.

Neben anorganischen Füllstoffen kann die Formmasse zur Herstellung der erfindungsgemäßen Abdichtungsbahn auch Pigmente und/oder Gleitmittel und/oder Stabilisatoren und/oder anorganische Flammschutzmittel enthalten. Insbesondere enthält sie auf 100 Gew.-% der Formmasse bis zu 40 Gew.-% anorganische Füllstoffe und/oder bis zu 15 Gew.-% Pigmente und/oder bis zu 5 Gew.-% Gleitmittel und/oder Stabilisatoren und/oder bis zu 50 Gew.-% anorganische Flammschutzmittel.

Die erfindungsgemäße Abdichtungsbahn kann insbesondere durch Kalandrieren hergestellt werden.

Es kann auch eine Flüssigfolie, welche durch Lösung einer Folie oder der Formmasse in THF oder Benzin 100 - 140 gebildet wird, hergestellt werden.

Aus der Formmasse lassen sich Dichtungsbahnen herstellen, auch solche, die mittig und/oder unterseitig durch Gewebe, Gelege, Gewirke, Vliese o.dgl. verstärkt sind.

Der Vorteil der Erfindung liegt darin, daß die erfindungsgemäßen Abdichtungsbahnen mit einer Geschwindigkeit von bis etwa 15 m/min quellgeschweißt werden können. Darüber hinaus können eventuelle mechanische Beschädigungen beim Einbau der Abdichtungsbahnen leicht mit quellgeschweißten Flicken dicht überdeckt werden. Besonders vorteilhaft ist der Einsatz einer sogenannten Flüssigfolie zur Reparatur kleinerer Beschädigungen oder zum Dichten von Nähten oder Kanten z.B. im Bereich von Dachdurchdringungen bei Lüftern ect. in der Art, daß die abzudichtenden Bereiche mit der Flüssigfolie abgespritzt werden. Nach dem Verdunsten des Lösungsmittels wird die Flüssigfolie fest und bildet dann eine sichere Abdichtung.

Überraschenderweise zeigen die erfindungsgemäßen Abdichtungsbahnen die für den Einsatz als Dichtungsbahn notwendige Reißfestigkeit und genügende Reißdehnung auch bei einer Temperatur von 80°C. Bekannterweise sind nämlich Abdichtungsbahnen aus z.B. Ethylen-Methylacrylat-Copolymer mit einem Methylacrylatgehalt größer als 27 % ohne Zusatz von Polyolefinen bereits ab 60°C nahezu amorph, d.h., sie weisen eine sehr geringe Reißfestigkeit auf. Ebenso bekannt ist, daß Polyolefine nicht quellschweißbar sind, so daß es in keiner Weise zu erwarten war, daß eine Formmasse, enthaltend diese beiden Komponenten, die Herstellung von quellschweißbaren Abdichtungsbahnen mit ausreichender mechanischer Festigkeit bei höheren Temperaturen ermöglicht.

Die Erfindung wird nachfolgend anhand eines Ausführungsbeispieles näher erläutert.

### Wege zur Ausführung der Erfindung

### Beispiel 1

Zur Herstellung einer Formmasse zur Herstellung einer quellschweißbaren Abdichtungsbahn werden folgende Komponenten in den angegebenen Gewichtsverhältnissen in einem Vertikal-Universalmischer vorgemischt:

| Komponente | Gew.-% |
|---|---|
| Ethylen-Methylacrylat-Copolymer mit 29% Methylacrylatgehalt (Lotryl® 29 MA 03) | 43,0 |
| Polyethylen-High-Density (Lupolen® 5261Z) | 18,5 |
| Aluminiumhydroxid | 31,0 |
| Titandioxid-Pigment | 7,0 |
| Stabilisatoren: Lichtschutzmittel, Antioxidantien | 0,5 |

Die Mischung wird auf einem Walzwerk bei einer Temperatur von 160°C und einer Walzenfriktion von
- vordere Walze 18 Upm
- hintere Walze 17 Upm
plastifiziert und zu Walzfellen ausgezogen. Die Walzfelle werden dann in einer Presse bei 100 bar und einer Temperatur von 170°C zu 1,5 mm Preßplatten verpreßt.

Die so hergestellten Preßplatten zeigen folgende Eigenschaftswerte:

| Prüfung | DIN-Norm | Wert | Einheit |
|---|---|---|---|
| THF-Extrakt bei einer Extraktionsdauer von 4 h | 53738 | 45,7 | % |
| Dicke | 53370 | 1,5 | mm |
| Reißfestigkeit bei 23°C | 53455 | 8,0 | N/mm² |
| Reißdehnung bei 23°C | 53455 | 720,0 | % |
| Reißfestigkeit bei 80°C | 53455 | 1,0 | N/mm² |
| Reißdehnung bei 80°C | 53455 | 530,0 | % |
| Scherkraft von mit Benzin 100-140 quellverschweißten Bahnen | 16726 | 600,0* | N/50 mm |

| | | | |
|---|---|---|---|
| * Alle 5 Proben sind an der Nahtkante gerissen. | | | |

### Beispiel 2

Ein Ansatz gemäß Beispiel 1, der zusätzlich 1 Gew.-% Gleitmittel enthält, wird mittels eines Planetwalzenextruders bei einer maximalen Massetemperatur von 185 °C plastifiziert. Die plastifizierte Formmasse wird über ein Walzwerk als Puffer und einen Strainer einem 5-Walzenkalander mit einer Breite von 2000 mm zugeführt. Die Walzentemperaturen sind auf 175 °C auf der ersten und 140 °C auf der letzten Walze mit entsprechenden Zwischenwerten bei den anderen Walzen eingestellt. Die Voreilung der zweiten Walze gegenüber der ersten Walze beträgt 25 %, die Voreilung der letzten Walze gegenüber der vierten Walze etwa 2 % mit entsprechenden Zwischenwerten bei den anderen Walzen.

Von der letzten Kalanderwalze wird eine Folie von einer Breite von 1900 mm und einer Dicke von 0,78 mm abgezogen.

Zwei dieser so hergestellten Folien werden auf einer handelsüblichen Triplieranlage zusammen mit einem mittig zulaufenden Glas-Gitter-Gewebe mit einem Flächengewicht von ca. 50 g/m² zu einer 1,5 mm dicken Dachdichtungsbahn kaschiert.

Die so hergestellte Abdichtungsbahn wies folgende physikalische Eigenschaften auf:

| Prüfung | DIN-Norm | Wert | Einheit |
|---|---|---|---|
| Dicke | 53370 | 1,5 | mm |
| Reißfestigkeit bei 23°C (Mittelwert längs/quer) | 53455 | 5,2 | N/mm² |
| Reißdehnung bei 23°C (Mittelwert längs/quer) | 53455 | > 200 | % |
| Reißfestigkeit bei 80°C (Mittelwert längs/quer) | 53455 | 1,2 | N/mm² |
| Reißdehnung bei 80°C (Mittelwert längs/quer) | 53455 | > 200 | % |
| Scherkraft von mit Benzin 100-140 quellverschweißten Bahnen | 16726 | 350* | N/50 mm |
| Trennkraft der Schichten (Mittelwert längs/quer) | 53357 | > 100 | N/50 mm |

| | | | |
|---|---|---|---|
| * Alle 5 Proben sind an der Nahtkante gerissen. | | | |

## Patentansprüche

1. Quellschweißbare Abdichtungsbahn, ***dadurch gekennzeichnet****,* daß sie enthält:
- ein Polymer, das aufgebaut ist aus dem Monomeren Ethylen und wenigstens einem Comonomer, welches aus der Gruppe bestehend aus
-- Vinylestern einer C₂- bis C₃-Alkancarbonsäure
-- und C₁- bis C₄-Alkylestern der Acrylsäure
ausgewählt ist, wobei der Comonomergehalt mindestens 27 Gew.-% beträgt,
- ein Polyolefin oder eine Mischung mehrerer Polyolefine in einer Menge von mindestens 10 Gew.-% der Abdichtungsbahn.

2. Abdichtungsbahn nach Anspruch 1, ***dadurch gekennzeichnet,*** daß der THF-Extrakt der Abdichtungsbahn nach DIN 53738 bei einer Extraktionsdauer von 4 h größer als 35 % ist.

3. Abdichtungsbahn nach Anspruch 1, ***dadurch gekennzeichnet,*** daß der Comonomergehalt größer als 30 Gew.-% ist.

4. Abdichtungsbahn nach Anspruch 1, *dadurch gekennzeichnet,* daß, soweit die Abdichtungsbahn keine Füllstoffe enthält, der THF-Extrakt nach DIN 53738 bei einer Extraktionsdauer von 4 h größer als 50 % und, soweit Füllstoffe enthalten sind, der THF-Extrakt größer als [50·(1-Füllstoffgehalt)] % ist.

5. Abdichtungsbahn nach Anspruch 1, ***gekennzeichnet durch*** einen zusätzlichen Gehalt an
- anorganischen Füllstoffen und/oder
- Pigmenten und/oder
- Gleitmitteln und/oder
- Stabilisatoren und/oder
- anorganische Flammschutzmitteln.

6. Abdichtungsbahn nach Anspruch 1, ***dadurch gekennzeichnet,*** daß sie auf 100 Gew.-% ihrer Masse
- bis zu 40 Gew.-% anorganische Füllstoffe und/oder
- bis zu 15 Gew.-% Pigmente und/oder
- bis zu 5 Gew.-% Gleitmittel und/oder Stabilisatoren und/oder
- bis zu 50 Gew.-% anorganische Flammschutzmittel
enthält.

7. Quellschweißbare Abdichtungsbahn nach Anspruch 1, ***dadurch gekennzeichnet,*** daß sie wenigstens drei Lagen umfaßt, wobei die mittlere Lage als Verstärkungslage aus einem Gewebe, Gelege, Gewirke, Vlies o. dgl. ausgebildet ist.

8. Verfahren zur Herstellung einer Abdichtungsbahn nach Anspruch 1, ***dadurch gekennzeichnet,*** daß eine Formmasse, enthaltend
- ein Polymer, das aufgebaut ist aus dem Monomeren Ethylen und wenigstens einem Comonomer, welches aus der Gruppe bestehend aus
-- Vinylestern einer C₂- bis C₃-Alkancarbonsäure und
-- C₁- bis C₄-Alkylestern der Acrylsäure
ausgewählt ist, wobei der Comonomergehalt mindestens 27 Gew.-% beträgt,
- ein Polyolefin oder eine Mischung mehrerer Polyolefine in einer Menge von mindestens 10 Gew.-% der Formmasse,
durch Kalandrieren zu einer Folie geformt wird, wobei der THF-Extrakt der Formmasse nach DIN 53738 bei einer Extraktionsdauer von 4 h größer als 35 % ist.

9. Verfahren zur Herstellung einer Abdichtung, ***dadurch gekennzeichnet,*** daß eine flüssige Masse, enthaltend
- ein Polymer, das aufgebaut ist aus dem Monomeren Ethylen und wenigstens einem Comonomer, welches aus der Gruppe bestehend aus
-- Vinylestern einer C₂- bis C₃-Alkancarbonsäure und
-- C₁- bis C₄-Alkylestern der Acrylsäure
ausgewählt ist, wobei der Comonomergehalt mindestens 27 Gew.-% beträgt,
- ein Polyolefin oder eine Mischung mehrerer Polyolefine in einer Menge von mindestens 10 Gew.-% der Formmasse,
- ein Lösungsmittel, welches aus der Gruppe bestehend aus
-- THF und
-- Benzin 100 - 140
ausgewählt ist,
auf die abzudichtenden Bereiche aufgebracht und das Lösungsmittel verdunstet wird.

## Claims

1. Solvent-weldable sealing web, **characterized in that** it contains:
- a polymer which is formed from the monomer ethylene and at least one co-monomer, which is selected from the group consisting of
- vinyl esters of a C₂ to C₃ alkane carboxylic acid
- and C₁ to C₄ alkyl esters of acrylic acid, with the co-monomer content amounting to at least 27% by weight,
- a polyolefine or a mixture of several polyolefines in a quantity of at least 10% by weight of the sealing web.

2. Sealing web according to claim 1,
**characterized in that** the THF extract of the sealing web according to DIN 53738 with an extraction time of 4 h is greater than 35%.

3. Sealing web according to claim 1,
**characterized in that** the co-monomer content is greater than 30% by weight.

4. Sealing web according to claim 1,
**characterized in that**, if the sealing web does not contain any fillers, the THF extract according to DIN 53738 with an extraction time of 4 h is greater than 50% and, if fillers are contained therein, the THF extract is greater than [50·(1-filler content)]%.

5. Sealing web according to claim 1,
**characterized by** an additional content of
- inorganic fillers and/or
- pigments and/or
- lubricants and/or
- stabilizers and/or
- inorganic flame retardants.

6. Sealing web according to claim 1,
**characterized in that** it contains
- up to 40% by weight inorganic fillers and/or
- up to 15% by weight pigments and/or
- up to 5% by weight lubricants and/or stabilizers and/or
- up to 50% by weight inorganic flame retardants, related to 100% by weight of its composition.

7. Solvent-bonding sealing web according to claim 1, **characterized in that** it comprises at least three layers, with the middle layer being constructed as reinforcement layer from a woven fabric, folded fabric, knitted fabric, non-woven fabric or suchlike.

8. Method for producing a sealing web according to claim 1, **characterized in that** a moulding composition, containing
- a polymer, which is formed from the monomer ethylene and at least one co-monomer, which is selected from the group consisting of
- vinyl esters of a C₂ to C₃ alkane carboxylic acid and
- C₁ to C₄ alkyl esters of acrylic acid,
with the co-monomer content amounting to at least 27% by weight,
- a polyolefine or a mixture of several polyolefines in a quantity of at least 10% by weight of the moulding composition,
is shaped into a foil by means of calendering, with the THF extract of the moulding compound according to DIN 53738 at an extraction time of 4 h being greater than 35%.

9. Method for producing a seal, **characterized in that** a liquid composition, containing
- a polymer, which is formed from the monomer ethylene and at least one co-monomer, which is selected from the group consisting of
- vinyl esters of a C₂ to C₃ alkane carboxylic acid and
- C₁ to C₄ alkyl esters of acrylic acid,
with the co-monomer content amounting to at least 27% by weight,
- a polyolefine or a mixture of several polyolefines in a quantity of at least 10% by weight of the moulding composition,
- a solvent, which is selected from the group consisting of
- THF and
- petroleum ether 100 - 140
is applied to the areas to be sealed and the solvent is evaporated.

## Revendications

1. Bande d'étanchéité collable par solvant, caractérisée en ce qu'elle contient
- un polymère constitué d'éthylène et d'au moins un comonomère choisi parmi les (alcane en C₂₋₃)-carboxylates de vinyle et les acrylates d'alkyle en C₁₋₄, la teneur en comonomère étant au moins égale à 27 % en poids,
- une polyoléfine ou un mélange de plusieurs polyoléfines à raison d'au moins 10 % en poids de la bande d'étanchéité.

2. Bande d'étanchéité selon la revendication 1, caractérisée en ce que la teneur en matières extractibles au THF de la bande d'étanchéité selon la norme DIN 53738 pour une durée d'extraction de 4 h est supérieure à 35 %.

3. Bande d'étanchéité selon la revendication 1, caractérisée en ce que la teneur en comonomères est supérieure à 30 % en poids.

4. Bande d'étanchéité selon la revendication 1, caractérisée en ce que, pour une bande d'étanchéité ne contenant pas de charges, la teneur en matières extractibles au THF selon la norme DIN 53738 est supérieure à 50 % pour une durée d'extraction de 4 heures, et pour une bande d'étanchéité contenant des charges, la teneur en matières extractibles au THF est supérieure à 50 x (1-teneur en charges) %.

5. Bande d'étanchéité selon la revendication 1, caractérisée par le fait qu'elle contient en outre
- des charges minérales et/ou
- des pigments et/ou
- des agents lubrifiants et/ou
- des agents stabilisants et/ou
- des agents ignifugeants minéraux.

6. Bande d'étanchéité selon la revendication 1, caractérisée en ce qu'elle contient, pour 100 % de matière,
- jusqu'à 40 % en poids de charges minérales et/ou
- jusqu'à 15 % en poids de pigments et/ou
- jusqu'à 5 % en poids d'agents lubrifiants et/ou d'agents stabilisants et/ou
- jusqu'à 50 % en poids d'agents ignifugeants minéraux.

7. Bande d'étanchéité collable par solvant selon la revendication 1, caractérisée en ce qu'elle contient au moins trois plis, le pli moyen étant une couche de renfort ayant la forme d'un tissé, d'un non tissé, d'un tricot ou d'un matériau similaire.

8. Procédé de fabrication d'une bande d'étanchéité selon la revendication 1, caractérisé en ce qu'une matière moulable contenant
- un polymère constitué d'éthylène et d'au moins un comonomère choisi parmi les (alcane en C₂₋₃)-carboxylates de vinyle et les acrylates d'alkyle en C₁₋₄, la teneur en comonomère étant au moins égale à 27 % en poids, et
- une polyoléfine ou un mélange de plusieurs polyoléfines à raison d'au moins 10 % en poids de la matière moulable,
est mise, par calandrage, sous forme d'une feuille, la teneur en matières extractibles au THF de la matière moulable selon la norme DIN 53738 pour une durée d'extraction de 4 h étant supérieure à 35 %.

9. Procédé de fabrication d'un joint, caractérisé en ce que l'on applique sur les zones à rendre étancher une masse liquide contenant
- un polymère constitué du monomère éthylène et d'au moins un comonomère choisi parmi les (alcane en C₂₋₃)-carboxylates de vinyle et les acrylates d'alkyle en C₁₋₄, la teneur en comonomère étant au moins égale à 27 % en poids,
- une polyoléfine ou un mélange de plusieurs polyoléfines à raison d'au moins 10 % en poids de la matière moulable, et
- un solvant choisi parmi le THF et le white-spirit 100 - 140, et en ce que l'on évapore le solvant.
